(19) **Europäisches Patentamt / European Patent Office / Office européen des brevets**

(11) **EP 4 027 131 A1**

(12) **EUROPEAN PATENT APPLICATION**
published in accordance with Art. 153(4) EPC

(43) Date of publication:
**13.07.2022 Bulletin 2022/28**

(21) Application number: **20860166.6**

(22) Date of filing: **01.09.2020**

(51) International Patent Classification (IPC):
**G01N 15/14** (2006.01)    **G06N 20/00** (2019.01)

(52) Cooperative Patent Classification (CPC):
**G01N 15/14; G06N 20/00**

(86) International application number:
**PCT/JP2020/032979**

(87) International publication number:
**WO 2021/045024 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2019   JP 2019159937**

(71) Applicant: **H.U. Group Research Institute G.K.**
**Tokyo 192-0031 (JP)**

(72) Inventors:
• **KONO, Keigo**
  **Tokyo 163-0408 (JP)**
• **FUTADA, Haruhiko**
  **Tokyo 163-0408 (JP)**

(74) Representative: **Cabinet Beaumont**
**4, Place Robert Schuman**
**B.P. 1529**
**38025 Grenoble Cedex 1 (FR)**

(54) **GATE REGION ESTIMATION PROGRAM, GATE REGION ESTIMATION DEVICE, AND LEARNING MODEL GENERATION METHOD**

(57)    The present invention provides a gate region estimation program and the like that estimate a gate region using a learning model.

This gate region estimation program causes a computer to execute processing of: acquiring a group of scatter diagrams including a plurality of scatter diagrams each different in a measurement item that are obtained from measurements by flow cytometry; inputting the group of scatter diagrams acquired to a learning model trained based on teaching data including a group of scatter diagrams and a gate region; and outputting an estimated gate region obtained from the learning model.

**FIG. 8**

EP 4 027 131 A1

**Description**

[Technical Field]

The present invention relates to a program and the like for estimating a gate region in flow cytometry.

[Background Art]

Flow cytometry (FCM) is a technique that enables measurement of multiple feature quantities for each single cell. In the flow cytometry, a suspension in which cells are suspended is prepared and injected into a measurement instrument so as to make the cells flow in a line. Light is directed to the cells flowing one by one to thereby produce scattered light and fluorescent light, which provides indexes such as the size of the cell, the internal complexity of the cell, the cellular composition and the like. The flow cytometry is used for a cellular immunological test in a medical field, for example.

In the cellular immunological test, a laboratory analyzes multiple index values obtained by the flow cytometry and returns the analysis results to a laboratory that requests for the analysis as a test result. The analysis techniques include gating as one example. The gating is a technique for selecting only a specific population from the obtained data and analyzing the selected one. Conventionally, specification of a population to be analyzed is performed by a tester i.e., a person who conducts the test drawing an oval or a polygon (referred to as a gate) in a two-dimensional scatter diagram. Such gate setting greatly depends on the experience and knowledge of the tester. Thus, it is difficult for a tester with less experience and less knowledge to appropriately perform gate setting.

In contrast thereto, a technique of automating gate setting has been proposed (Patent Documents 1 and 2, etc.). Since the conventional technique, however, is a setting method using cellular density information or is a rule-based setting method, this does not fully utilize the experience and knowledge that have been accumulated by the tester.

[Prior Art Document]

[Patent Document]

Patent Document 1: Japanese Patent No. 6480918
Patent Document 2: Japanese Patent No. 5047803

[Summary of the Invention]

[Problems to be Solved by the Invention]

The present invention is made in view of such circumstances. The object thereof is to provide a gate region estimation program and the like that estimate a gate region using a learning model.

[Means for Solving Problems]

According to the present invention, there is provided gate region estimation program causing a computer to execute processing of: acquiring a group of scatter diagrams including a plurality of scatter diagrams each different in a measurement item that are obtained from measurements by flow cytometry; inputting the group of scatter diagrams acquired to a learning model trained based on teaching data including a group of scatter diagrams and a gate region; and outputting an estimated gate region obtained from the learning model.

[Effect of the Invention]

The present invention enables gate setting like a gate setting performed by an experienced tester.

[Brief Description of Drawings]

FIG. 1 is an explanatory view illustrating an example of the configuration of a test system;

FIG. 2 is a block diagram illustrating an example of a hardware configuration in the processing unit;
FIG. 3 shows an example of one record to be stored in the measurement value DB;
FIG. 4 is an explanatory view illustrating an example of the feature information DB;
FIG. 5 is an explanatory view illustrating an example of the gate DB;
FIG. 6 is an explanatory view relating to regression model generation processing;
FIG. 7 is a flowchart showing an example of the procedure of the regression model generation processing;
FIG. 8 is a flowchart showing an example of the procedure of gate information output processing;
FIG. 9 is an explanatory view illustrating one example of a scatter diagram on which gates are set;
FIG. 10 is an explanatory view illustrating an example of analysis of the interior of the gate;
FIG. 11 is a flowchart showing an example of the procedure of retraining processing;
FIG.12 is an explanatory view showing an example of ten small populations;
FIG. 13 is an explanatory view showing the numbers of cells for respective partitions of the ten small populations;
FIG. 14 illustrates the numbers of cells for the respective partitions for ten small populations;
FIG. 15 is an explanatory view showing an example of calculation results of APRs for SEQ1 to SEQ10;
FIG. 16 is an explanatory view showing an example of calculation results of APR for a single specimen;
FIG.17 is an explanatory view showing an example of the alternative positive rate DB;
FIG.18 is an explanatory view relating to regression model generation processing;
FIG. 19 is a flowchart showing another example of the procedure of the regression model generation processing;
FIG. 20 is a flowchart showing an example of the procedure of alternative positive rate calculation processing;
FIG. 21 is a flowchart showing another example of the procedure of the gate information output processing;
FIG.22 is a flowchart showing another example of the procedure of the regression model generation processing;
FIG.23 is a flowchart showing another example of the procedure of the gate information output processing.

[Best Modes for Carrying Out the Invention]

The following embodiments will be described with reference to drawings. The following description is made while taking CD45 gating in a Leukemia, Lymphoma Analysis (LLA) test as an example. The procedure of the LLA test will first be described. The LLA test roughly includes five processes. These five processes are: 1. dispensing; 2. performing pretreatment; 3. measuring and drawing; 4. analyzing; and 5. reporting.

The dispensing process is for dividing one specimen (hereinafter referred to as "ID"). In the LLA test, one ID is divided into ten at the maximum for running a test. Each of the divided specimens is denoted as SEQ. The divided ten specimens are denoted as SEQ1, SEQ2, ... SEQ 10. In the pretreatment process, the SEQs are subjected to a process common to the SEQs, e.g., adjustment of the cellular density and are individually labeled with surface markers. SEQ1 is assumed as a negative control. The negative control means that test is performed on a subject already known to have a negative result under the same condition as that for a subject desired to be validated. Alternatively, the negative control means the subject of such a test. In the test, the result for the subject desired to be validated and the result for the negative control are compared, whereby the test result is analyzed based on a relative difference between them.

In the measuring and drawing process, measurement is performed on the ten SEQs by a flow cytometer to obtain fluorescence values. For individual cells in each SEQ, information consisting of five items including a measurement value can be acquired. The details of the items are FSC, SSC, FL1, FL2 and FL3. FSC indicates a measurement value of forward scattered light. FSC indicates a value of scattered light detected forward with respect to the optical axis of a laser beam. Since FSC is approximately proportional to the surface area or the size of a cell, it is an index value indicating the size of a cell. SSC indicates a measurement value of side scattered light. The side scattered light is light detected at a 90° angle with respect to the optical axis of a laser beam. SSC is light mostly directed to and scattered by materials within the cell. Since SSC is approximately proportional to the granularity or the internal composition of a cell, it is an index value of the granularity or the internal composition of a cell. FL indicates florescence but here indicates multiple fluorescent detectors provided in a flow cytometer. The number indicates the order of each fluorescent detector. FL1 indicates a first fluorescent detector but here represents an item to which marker information of each SEQ is set as a marker. FL2 indicates a second fluorescent detector, but here represents an item to which marker information of each SEQ is set as a marker. FL3 indicates the third fluorescent detector but here means the name of an item to which the marker information of CD45 is set.

The flow cytometer creates two scatter diagrams for each SEQ and displays them on the display or the like. For example, one of the scatter diagrams is graphed with SSC on the one axis and FL3 on the other axis. The other one of the scatter diagrams is graphed with SSC on the one axis and FSC on the other axis.

In the analyzing process, the tester estimates a disease according to the manner of the scatter diagrams and creates gates useful for specifying a disease on the scatter diagrams. The tester then creates a FL1-FL2 scatter diagram for each SEQ only consisting of the cells existing in the gate region and observes a reaction to each of the markers for each SEQ. In the reporting process, the tester determines particularly useful two gates for reporting and creates a report.

Embodiment 1

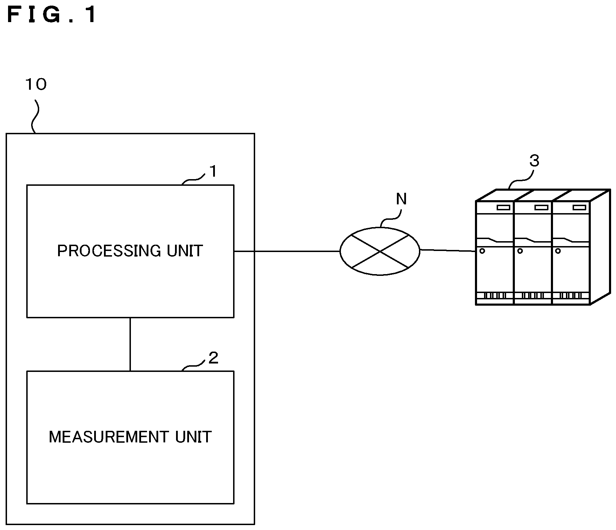

The following describes a mode in which gate setting conventionally performed by the tester in the analyzing process is performed by a learning model. FIG. 1 is an explanatory view illustrating an example of the configuration of a test system. The test system includes a flow cytometer (gate region estimation device) 10 and a learning server 3. The flow cytometer 10 and the learning server 3 are communicably connected through a network N. The flow cytometer 10 includes a processing unit 1 that performs various processing related to an operation of the entire device and a measurement unit 2 that accepts specimens and measures them by the flow cytometry.

The learning server 3 is composed of a sever computer, a workstation or the like. The learning server 3 is not an indispensable component in the test system. The learning server 3 functions as a supplementary of the flow cytometer 10 and stores measurement data and a learning model as a backup. Moreover, in place of the flow cytometer 10, the learning server 3 may generate a learning model and retrain the learning model. In this case, the learning server 3 transmits parameters and the like for characterizing the learning model to the flow cytometer. Note that the function of the learning server 3 may be provided using a cloud service and a cloud storage.

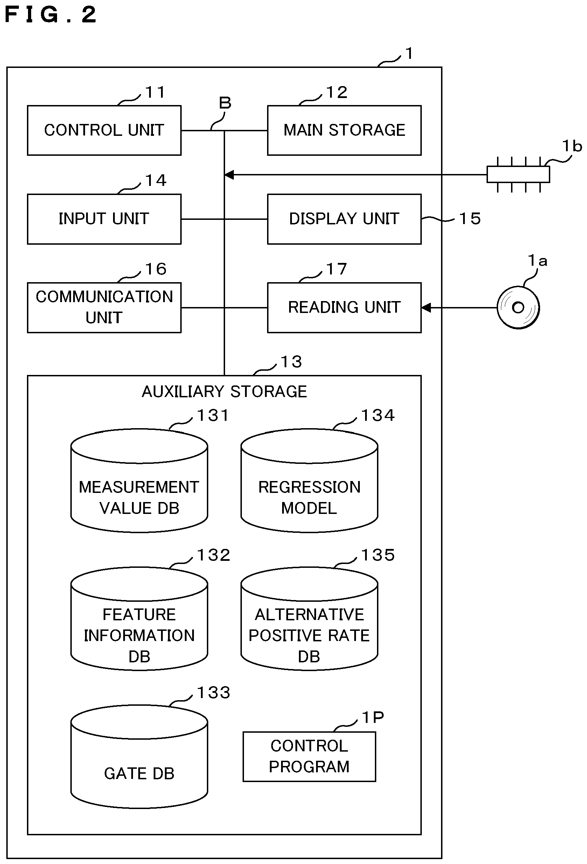

FIG. 2 is a block diagram illustrating an example of a hardware configuration in the processing unit. The processing unit 1 includes a control unit 11, a main storage 12, an auxiliary storage 13, an input unit 14, a display unit 15, a communication unit 16 and a reading unit 17. The control unit 11, the main storage 12, the auxiliary storage 13, the input unit 14, the display unit 15, the communication unit 16 and the reading unit 17 are connected through buses B. The processing unit 1 may be provided separately from the flow cytometer 10. The processing unit 1 may be composed of a personal computer (PC), a laptop computer, a tablet-typed computer or the like. The processing unit 1 may be composed of a multicomputer consisting of multiple computers, may be composed of a virtual machine virtually constructed by software, or of a quantum computer.

The control unit 11 has one or more arithmetic processing devices such as a central processing unit (CPU), a micro-processing unit (MPU), a graphics processing unit (GPU) and the like. The control unit 11 performs various information processing, control processing and the like related to the flow cytometer 10 by reading out and executing an operating system (OS) (not illustrated) and a control program 1P (gate region estimation program) that are stored in the auxiliary storage 13. Furthermore, the control unit 11 includes functional parts such as an acquisition unit and an output unit.

The main storage 12 is a static random access memory (SRAM), a dynamic random access memory (DRAM), a flash memory or the like. The main storage 12 mainly temporarily stores data necessary for the control unit 11 to execute arithmetic processing.

The auxiliary storage 13 is a hard disk, a solid state drive (SSD) or the like and stores the control program 1P and various databases (DB) necessary for the control unit 11 to execute processing. The auxiliary storage 13 stores a measurement value DB 131, a feature information DB 132, a gate DB 133, an alternative positive rate DB 135 and a regression model 134. The alternative positive rate DB 135 is not indispensable in the present embodiment. The auxiliary storage 13 may be an external storage device connected to the flow cytometer 10. The various DBs stored in the auxiliary storage 13 may be stored in a database server or a cloud storage that is connected over the network N.

The input unit 14 is a keyboard and a mouse. The display unit 15 includes a liquid crystal display panel or the like. The display unit 15 displays various information such as information for measurement, measurement results, gate information and the like.
The display unit 15 may be a touch panel display integrated with the input unit 14. Note that information to be displayed on the display unit 15 may be displayed on an external display device for the flow cytometer 10.

The communication unit 16 communicates with the learning server 3 over the network N. Moreover, the control unit 11 may download the control program 1P from another computer over the network N or the like using the communication unit 16 and store it in the auxiliary storage 13.

The reading unit 17 reads a portable storage medium 1a including a CD (compact disc)-ROM and a DVD (digital versatile disc)-ROM. The control unit 11 may read the control program 1P from the portable storage medium 1a via the reading unit 17 and store it in the auxiliary storage 13. Alternatively, the control unit 11 may download the control program 1P from another computer over the network N or the like and store it in the auxiliary storage 13. Alternatively, the control unit 11 may read the control program 1P from a semiconductor memory 1b.

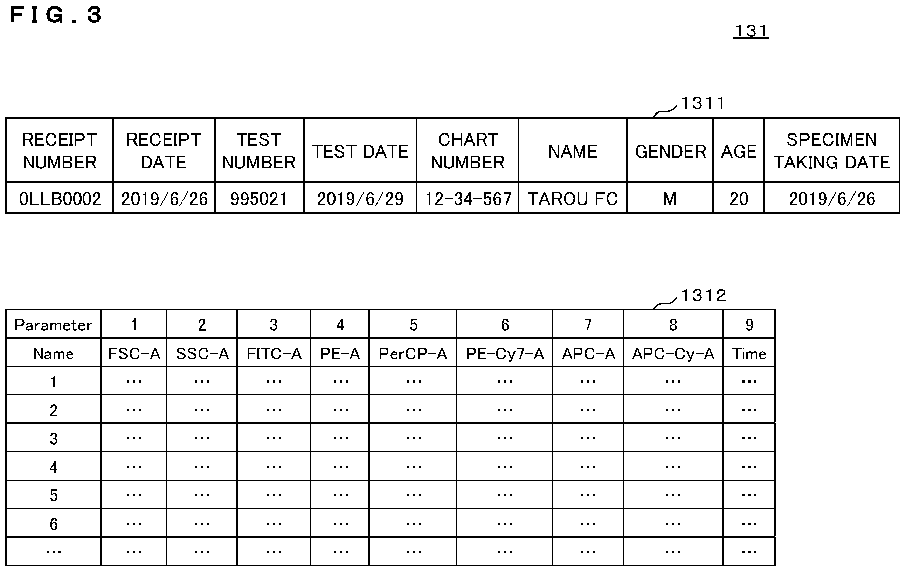

The databases stored in the auxiliary storage 13 will now be described. FIG. 3 is an explanatory view illustrating an example of the measurement value DB 131. The measurement value DB 131 stores measurement values as a result of measurements by the flow cytometer 10. FIG. 3 shows an example of one record to be stored in the measurement value DB 131. Each record stored in the measurement value DB 131 includes a base part 1311 and a data part 1312. The base part 1311 includes a receipt number column, a receipt date column, a test number column, a test date column, a chart number column, a name column, a gender column, an age column and a specimen taking date. The receipt number column stores a receipt number issued when a request for a test is received.
The receipt date column stores a date when a request for a test is received. The test number column stores a test number issued when a test is run. The test date column stores a date when a test is run. The chart number column stores a chart number corresponding to the request for the test. The name column stores a name of a subject who provides a specimen. The gender column stores a gender of the subject. For example, if the subject is a man, the gender column stores M while if the subject is a woman, the gender column stores F. The age column stores an age of the subject. The specimen taking date column stores a date when a specimen was taken from the subject. In the data part 1312, each column stores a measurement value for each cell concerning the measurement item. Each row stores measurement values for each cell concerning the respective measurement items.

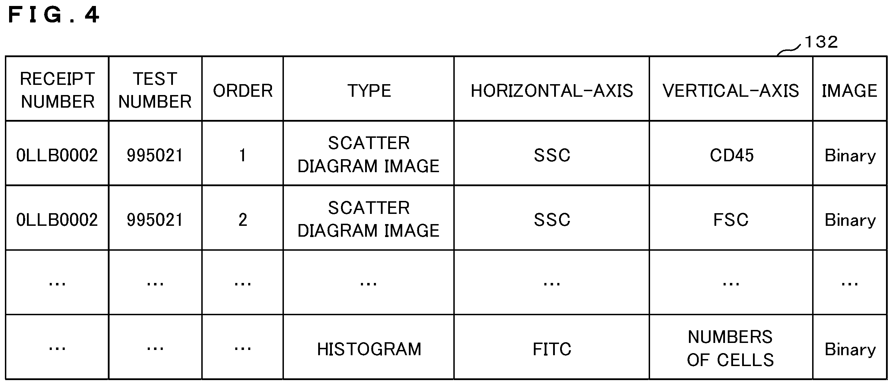

FIG. 4 is an explanatory view illustrating an example of the feature information DB. The feature information DB 132 stores information indicating features (hereinafter referred to as "feature information") obtained from the measurement values. The feature information is a scatter diagram or a histogram, for example. The feature information DB 132 includes a receipt number column, a test number column, an order column, a type column, a horizontal-axis column, a vertical-axis column and an image column. The receipt number column stores a receipt number. The test number column stores a test number. The order column stores an order of the feature information in the same test. The type column stores a type of the feature information. The type is, for example, a scatter diagram or a histogram as described above. The horizontal-axis column stores an item employed as a horizontal axis in the scatter diagram or the histogram. The vertical-axis column stores an item employed as a vertical axis in the scatter diagram. In the case of the histogram, the vertical axis is the number of cells, and thus the vertical-axis column stores the number of cells. The image column stores the scatter diagram or the histogram as an image.

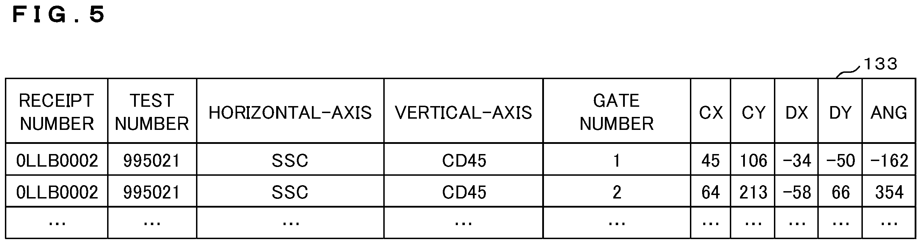

FIG. 5 is an explanatory view illustrating an example of the gate DB. The gate DB 133 stores information on a gate (gate information) set to the scatter diagram. The gate information is information for defining a gate region. The gate information is information on a graphic representing the contour of a gate region, a range of the measurement values included in the gate region, a collection of the measurement values included in the gate region or the like. The gate information may be pixel coordinate values of the dots included in the gate region on the scatter diagram image. Though the gate information herein is assumed as a graphic representing the contour of a gate region and having an oval shape, the gate information is not limited thereto. The graphic herein may be a polygon formed of multiple sides or may have a shape connecting multiple curves. The gate DB 133 includes a receipt number column, a test number column, a horizontal-axis column, a vertical-axis column, a gate number column, a CX column, a CY column, a DX column, a DY column and an ANG column. The receipt number column stores a receipt number. The test number column stores a test number. The horizontal-axis column stores an item employed as a horizontal axis in the scatter diagram. The vertical-axis column stores an item employed as a vertical axis in the scatter diagram. The gate number column stores an order number of gates. The CX column stores a center x-coordinate value of the oval. The CY column stores a center y-coordinate value of the oval. The DX column stores a value of a minor axis of the oval. The DY column stores a value of a major axis of the oval. The ANG column stores an inclined angle of the oval. For example, the inclined angle is an angle formed between the horizontal axis and the major axis. In the case where a polygon is settable as a gate shape, the gate DB 133 stores coordinate columns for the multiple points forming of the polygon.

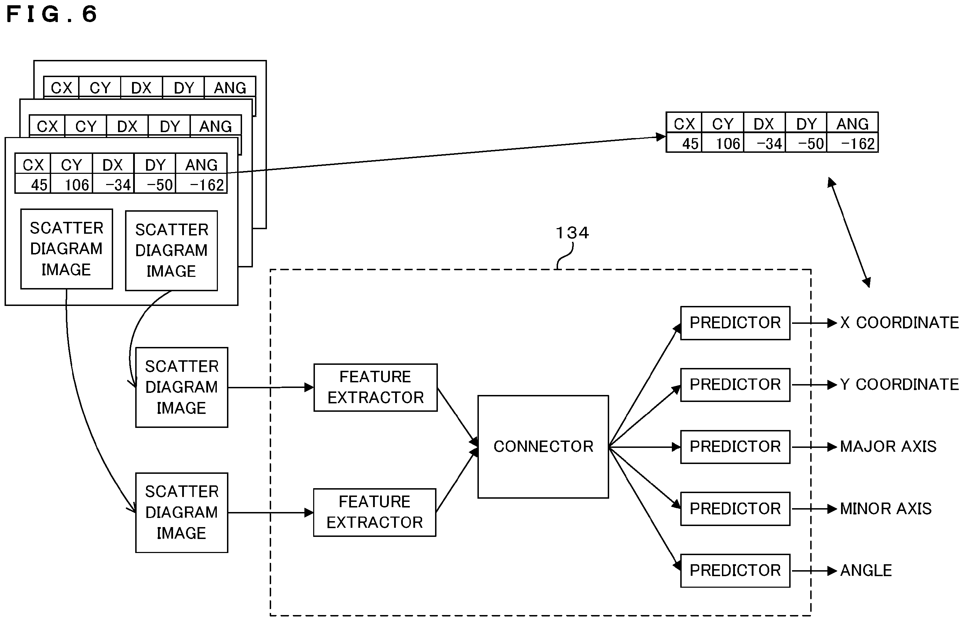

FIG. 6 is an explanatory view relating to regression model generation processing. FIG. 6 shows the processing of performing machine learning to generate a regression model 134. The processing of generating the regression model 134 will be described with reference to FIG. 6.

In the flow cytometer 10 according to the present embodiment, the processing unit 1 performs deep learning for the appropriate feature quantities of a gate on the scatter diagram image created based on the measurement results obtained by the measurement unit 2. Such deep learning allows the processing unit 1 to generate the regression model 134 to which multiple scatter diagram images (a group of scatter diagrams) are input and from which gate information is output. The multiple scatter diagram images are images of multiple scatter diagrams each being different in an item of at least one of the axes. The multiple scatter diagram images are two scatter diagram images composed of an image of a scatter diagram graphed with SSC on the horizontal axis and FL3 on the vertical axis and an image of a scatter diagram graphed with SSC on the horizontal axis and FSC on the vertical axis. Three or more scatter diagram images may be input to the regression model 134. The neural network is Convolution Neural Network (CNN), for example. The regression model 134 includes multiple feature extractors for training feature quantities of the respective scatter diagram images, a connector for connecting the feature quantities output from the respective feature extractors, and multiple predictors for predicting and outputting items of the gate information (center x coordinate, center y coordinate, major axis, minor axis and angle of the inclination) based on the connected feature quantities. Note that, not the scatter diagram images, a collection of measurement values, which are the base of the scatter diagrams, may be input to the regression model 134.

Each of the feature extractors includes an input layer and an intermediate layer. The input layer has multiple neurons that accept inputs of the pixel values of the respective pixels included in the scatter diagram image, and passes on the input pixel values to the intermediate layer. The intermediate layer has multiple neurons and extracts feature quantities from the scatter diagram image, and passes on the feature quantities to an output layer. In the case where the feature extractor is CNN, for example, the intermediate layer is composed of alternate layers of a convolution layer that convolves the pixel values of the respective pixels input from the input layer and a pooling layer that maps the pixel values convolved in the convolution layer. The intermediate layer finally extracts image feature quantities while compressing the image information. Instead of preparing feature extractors for respective ones of scatter diagram images to be input, one feature extractor may receive inputs of multiple scatter diagram images.

Though the following description is made assuming that the regression model 134 is CNN in the present embodiment, the regression model 134 may be any trained model constructed by another learning algorithm such as a neural network other than CNN, Bayesian Network, Decision Tree or the like without being limited to CNN.

The processing unit 1 performs training using teaching data including multiple scatter diagram images and correct answer values of the gate information corresponding to the scatter diagrams that are associated with each other. As illustrated in FIG. 6, the teaching data is data including multiple scatter diagram images labeled with gate information, for example. Here, in the interest of simplicity, two types of scatter diagrams are called a set of scatter diagrams. Though the following description is made assuming that one gate is provided for a set of scatter diagrams, multiple gates may be provided. In this case, a value indicating usefulness is included in the gate information.

The processing unit 1 inputs two scatter diagram images as teaching data to the respective different feature extractors. The feature quantities output from the respective feature extractors are connected by the connector. The connection by the connector includes a method of simply connecting the feature quantities (Concatenate), a method of summing up values indicating the feature quantities (ADD) and a method of selecting the maximum feature quantity (Maxpool).

The respective predictors output gate information as prediction results based on the connected feature quantities. A combination of values output from the respective predictors is a set of gate information. Multiple sets of gate information may be output. In this case, predictors in number corresponding to the multiple sets are provided. For example, if the gate information with the highest priority and the gate information with the second highest priority are output, five to ten predictors in FIG. 6 are needed.

The processing unit 1 compares the gate information obtained from the predictors with the information labeled on the scatter diagram image in the teaching data, that is, the correct answer values to optimize parameters used in the arithmetic processing at the feature extractors and the predictors so that the output values from the predictors approximate the correct answer values. The parameters include, for example, weights (coupling coefficient) between neurons, a coefficient of an activation function used in each neuron and the like. Any method of optimizing parameters may be employed. For example, the processing unit 1 optimizes various parameters by using backpropagation. The processing unit 1 performs the above-mentioned processing on data for each test included in the teaching data to generate the regression model 134.

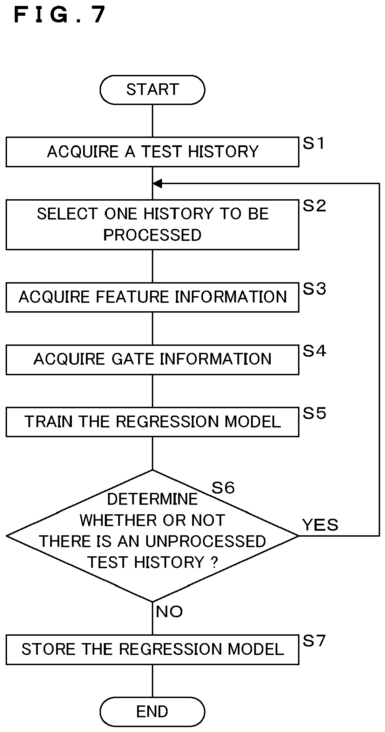

Next, the processing performed by the control unit 11 of the processing unit 1 will be described. FIG. 7 is a flowchart showing an example of the procedure of the regression model generation processing. The control unit 11 acquires a test history (step S1). The test history includes accumulated test results conducted in the past, specifically the past measurement values that are stored in the measurement value DB 131. The control unit 11 selects one history to be processed (step S2). The control unit 11 acquires feature information corresponding to the selected history (step S3). The feature information is a scatter diagram, for example. The feature information is acquired from the feature information DB 132. If the feature information is not stored, it may be created from the measurement values. The control unit 11 acquires gate information corresponding to the selected history (step S4). The gate information is acquired from the gate DB 133. The control unit 11 trains the regression model 134 using the acquired feature information and gate information as teaching data (step S5). The control unit 11 determines whether or not there is an unprocessed test history (step S6). If determining that there is an unprocessed test history (YES at step S6), the control unit 11 returns the processing to step S2 to perform processing relating to the unprocessed test history. If determining that there is no unprocessed test history (NO at step S6), the control unit 11 stores the regression model 134 (step S7) and ends the processing.

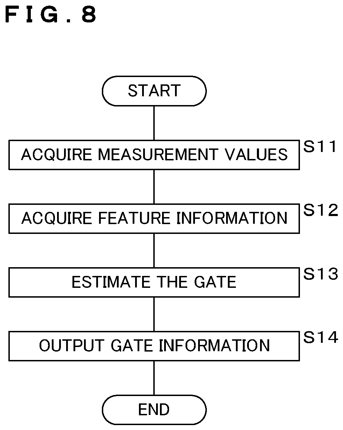

Next, gate setting using the regression model 134 will be described. FIG. 8 is a flowchart showing an example of the procedure of gate information output processing. The control unit 11 acquires measurement values from the measurement unit 2 or the measurement value DB 131 (step S11). The control unit 11 acquires feature information corresponding to the measurement values (step S12). The control unit 11 inputs the feature information to the regression model 134 to estimate a gate (step S13). The control unit 11 outputs gate information (estimated gate region) (step S14) and ends the processing.

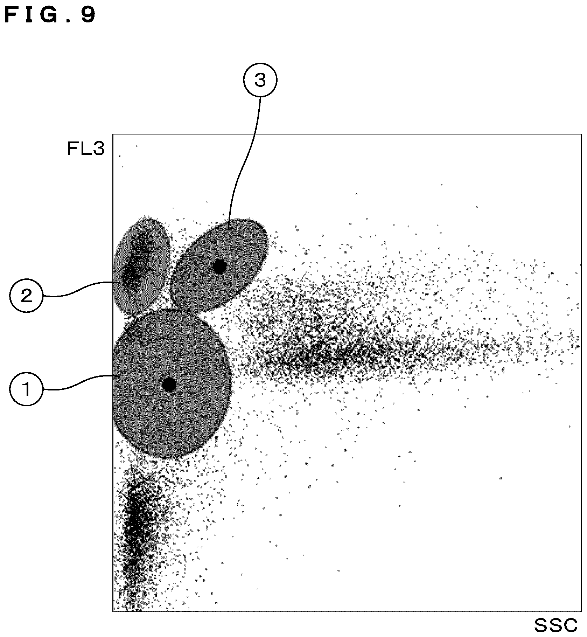

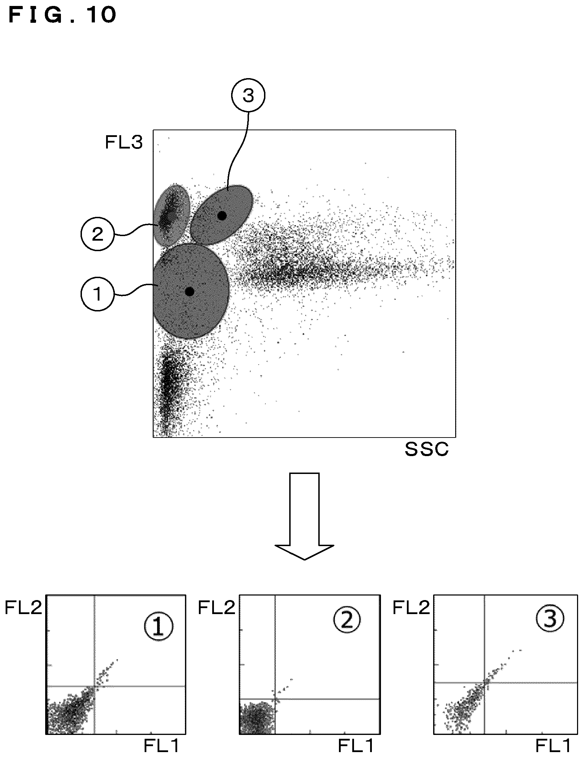

A gate is set to the scatter diagram displayed on the display unit 15 based on the gate information. FIG. 9 is an explanatory view illustrating one example of a scatter diagram on which gates are set. FIG. 9 is scatter diagram graphed with SSC on the horizontal axis and the FL3 on the vertical axis. Three gates are set. All the gates have an oval shape. FIG. 10 is an explanatory view illustrating an example of analysis of the interior of the gate. At the upper part of FIG. 10, a scatter diagram the same as that in FIG. 9 is shown. At the lower part of FIG. 10, scatter diagrams for respective populations of cells included in the gates are displayed. The horizontal axis of each of the three scatter diagrams is FL1 while the vertical axis thereof is FL2. The tester views the three scatter diagrams and, if the set gates are not appropriate, modifies them. The flow cytometer is provided with a drawing tool, which makes it possible to edit an oval for setting a gate. The tester can change the position, the size and the ratio between the major axis and the minor axis of an oval by using a pointing device such as a mouse included in the input unit 14. The tester can also add and erase a gate. The gate information (modified region data) relating to the gate decided to be modified is stored in the gate DB 133. The new measurement values, feature information and gate information are used as teaching data for retraining the regression model 134.

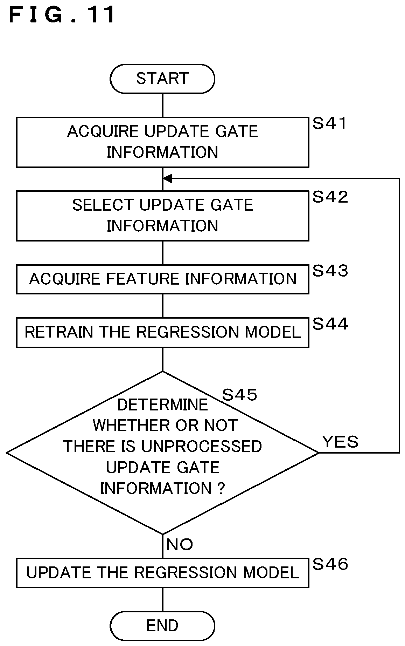

FIG. 11 is a flowchart showing an example of the procedure of retraining processing. The control unit 11 acquires update gate information (step S41). The update gate information is gate information after update if the tester modifies a gate based on the gate information output from the regression model 134. The control unit 11 selects update gate information to be processed (step S42). The control unit 11 acquires two scatter diagram images (feature information) corresponding to the gate information (step S43). The control unit 11 retrains the regression model 134 using the updated gate information and the two scatter diagram images as teaching data (step S44). The control unit 11 determines whether or not there is unprocessed update gate information (step S45). If determining that there is unprocessed update gate information (YES at step S45), the control unit 11 returns the processing to step S42 to perform processing on the unprocessed update gate information. If determining that there is no unprocessed update gate information (NO at step S45), the control unit 11 updates the regression model 134 based on the result of the retraining (step S46) and ends the processing.

It is noted that such retraining processing may be performed by the learning server 3, not by the flow cytometer 10. In this case, the parameters of the regression model 34 updated as a result of retraining are transmitted from the learning server 3 to the flow cytometer 10, and the flow cytometer 10 updates the regression model 134 that is stored therein. Moreover, the retraining processing may be executed every time update gate information occurs, may be executed at a predetermined interval like daily batch, or may be executed after predetermined number of update gate information occur.

Though described is an example in which a single numerical value (center x coordinate, center y coordinate, major axis, minor axis or angle of the inclination) is output from each of the multiple output layers of the regression model 134, a set of numerical data, not limited to a single value, may be output. Five dimensional data including a center x coordinate, a center y coordinate, a major axis, a minor axis and an angle of the inclination may be output. For example, sets of values (10, 15, 20, 10, 15), (5, 15, 25, 5, 20), (10, 15, ...) ... are assigned to the respective nodes included in the output layer, and the nodes may output probabilities with respect to the sets of values.

Modification

Though the gate information that is input to and output from a learning model is a numerical value, it may be an image. The training and estimation in this case will be performed below. U-NET as a model for the semantic segmentation is employed as a learning model. U-NET is a type of Fully Convolutional Networks (FCN) and includes an encoder that performs downsampling and a decoder that performs upsampling. U-NET is a neural network composed of only a convolutional layer and a pooling layer without provision of a fully connected layer. Upon training, multiple scatter diagram images are input to the U-NET. The U-NET outputs images each divided into a gate region and a non-gate region, and performs trainings such that the gate region indicated in the output image approaches the correct answer. In the case where a gate region is estimated after the training, two scatter diagram images are input to the U-NET. A scatter diagram image on which a gate region is represented can be obtained as an output. Edge extraction is performed on the obtained image to detect the contour of an oval representing the gate. The center coordinates (CX, CY), the major axis DX, the minor axis DY and a rotation angle ANG of the oval are evaluated from the detected contour. Then, cells included within the gate are specified. The specification can be achieved by using a known algorithm for determining whether a point is inside or outside of a polygon. The number of gate regions to be trained and output may be more than one.

In the present embodiment, even a less experienced tester can perform gate setting for indicating a population of cells important for specifying a disease. In addition, an experienced tester can perform gate setting based on the gate setting proposed by the regression model 134 unlike the conventional method, which can shorten his/her working hours.

Embodiment 2

In the present embodiment, an alternative positive rate is included as an input to the regression model 134. In flow cytometry, the feature quantity is first detected by reaction with a fluorescent marker added to cells. The measurement value obtained by a marker is a relative value and it is necessary to decide a threshold to judge positivity or negativity when used. The threshold is decided by observing the populations within the gate from a negative control specimen. The threshold is evaluated from the negative specimen, so that for subdivided specimens having been added with the marker and measured, the positive rate of the marker can be obtained. When conventionally performing a gate setting, the tester modifies a gate while viewing the positive rate (the rate of positive cells) within the gate. Thus, even in the case where gate setting is performed by using the regression model 134 as well, the positive rate is possibly highly useful. Since the positive rate, however, is an index that can be calculated after gate setting is performed, it cannot be obtained before gate setting. Hence, an index that can be calculated even when gate setting has not been performed yet and that is considered to be effective for gate setting like the positive rate is introduced. This index is called an alternative positive rate.

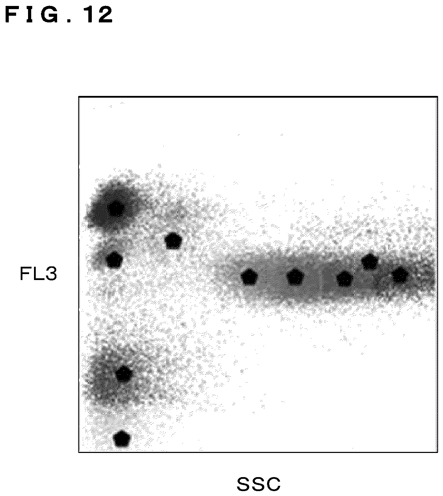

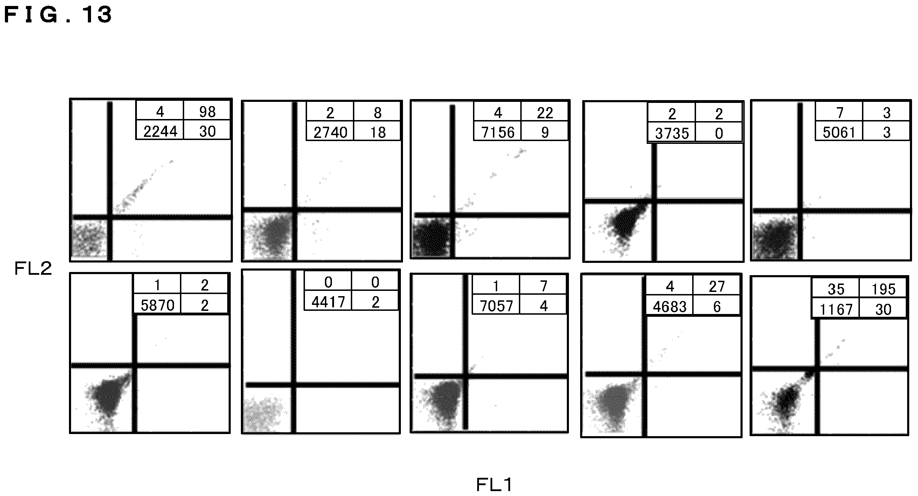

The alternative positive rate can be calculated as described below. The cell populations in a specimen each have a different threshold for separating positivity and negativity. The cell populations thus are subdivided into populations, and a threshold is set for each of the subdivided populations. In the present embodiment, a three-dimensional automatic clustering method, namely k-means, is applied to a scatter diagram of SEQ1 with FSC, SSC and FL3 on the axes to thereby create n pieces of small populations. Here, n is a natural number and is equal to 10. FIG.12 is an explanatory view showing an example of ten small populations. A pentagonal mark indicates the center of each of the small populations used for k-means. Though FIG. 12 shows a two-dimensional display with SSC on the horizontal axis and FL3 on the vertical axis, it is actually a three-dimensional clustering with FSC on the axis in the direction normal to the sheet of drawing. A threshold indicating negative is mechanically calculated based on FL1 and FL2 of each of the small populations in SEQ 1. For example, a value including 90% of the cells in the small population is assumed as a threshold. Then, the numbers of cells for partitions that divide the small population by the thresholds are evaluated for each small population. FIG. 13 is an explanatory view showing the numbers of cells for respective partitions of the ten small populations. A total number of the cells in each partition is evaluated, and the evaluated total number for each partition is divided by the total number of cells to evaluate the ratio. The ratios for the respective partitions calculated for each SEQ are assumed to be an alternative positive rate. The numbers of cells in the respective partitions are assumed as UL (the number of cells at the upper left, the number of cells for which FL1 is negative and FL2 is positive), UR (the number of cells at the upper right, the number of cells for which FL1 is positive and FL2 is positive), LR (the number of cells at the lower right, the number of cells for which FL1 is positive and FL2 is negative), and LL (the number of cells at the lower left, the number of cells for which FL1 is negative and FL2 is negative). Where each small population is k (k=1, 2, ...10) and the total number of cells is N, the alternative positive rate (APR) can be calculated according to the following formula (1).

[Formula 1]

$$APR = \frac{1}{N} \begin{bmatrix} \sum_{k=1}^{10} UL_k & \sum_{k=1}^{10} UR_k \\ \sum_{k=1}^{10} LL_k & \sum_{k=1}^{10} LR_k \end{bmatrix} \quad \cdots (1)$$

APR for SEQ 1 is as follows:

[Formula 2]

$$\begin{bmatrix} 0.001 & 0.002 \\ 0.988 & 0.008 \end{bmatrix}$$

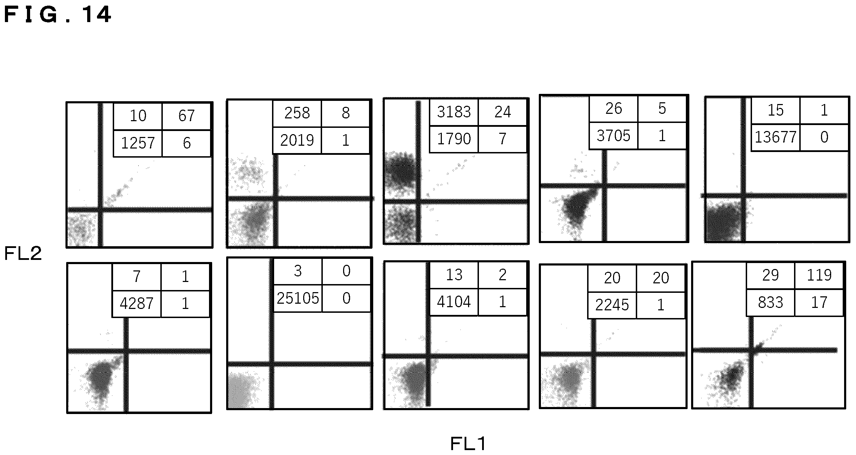

It is noted that since SEQ1 is a negative specimen, there are few cells in the partitions except for the lower left partition. With respect to SEQ2 and thereafter, the central points for the respective small populations of SEQ1 are reflected on each of the SEQs. For each of the SEQs, cells are classified into ten small populations based on their closest central points. The threshold obtained for SEQ1 is applied to each of the small populations to generate four partitions. As in SEQ1, the numbers of cells for the respective four partitions are evaluated for each of the small populations. FIG. 14 illustrates the numbers of cells for the respective partitions for ten small populations. FIG. 14 is an example of SEQ2. The following shows APR obtained using the above-mentioned Formula (1) based on the numbers of cells for the respective partitions shown in FIG. 14.

## [Formula 3]

$$\begin{bmatrix} 0.057 & 0.004 \\ 0.939 & 0.001 \end{bmatrix}$$

Comparing APR for SEQ 2 with APR for SEQ1, the number of cells at the upper left has increased from 0.001 to 0.057. This shows the presence of the cell population reacting with the SEQ2 marker in the specimen.

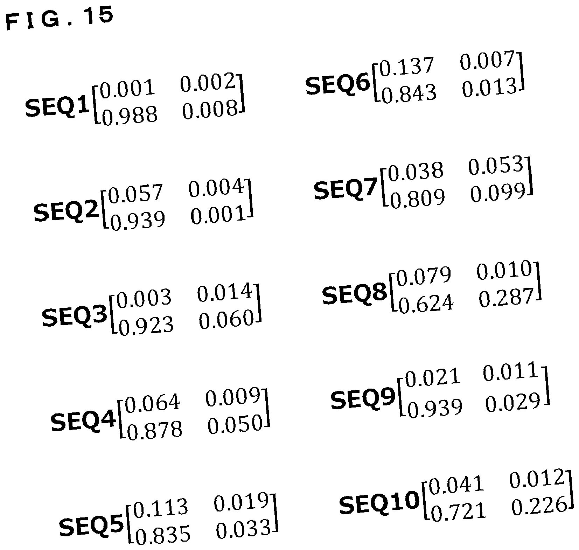

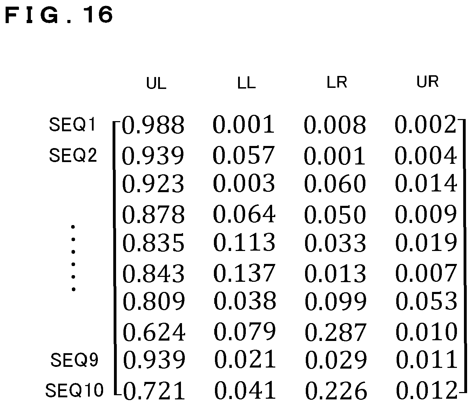

Likely, APR is calculated for SEQ 3 to SEQ 10. The following describes a calculation example of APR for each of the SEQs. FIG. 15 is an explanatory view showing an example of calculation results of APRs for SEQ1 to SEQ10. The matrix with 10 rows by 4 columns obtained by combining APRs of SEQs is regarded as APR for a single specimen as a whole. FIG. 16 is an explanatory view showing an example of calculation results of APR for a single specimen. FIG. 16 is a matrix with 10 rows by 4 columns obtained by combining APRs of the SEQs shown in FIG. 15. The alternative positive rate is represented by a matrix obtained by dispensing one specimen into multiple specimens, performing clustering to divide the distribution obtained from the test result of a predetermined dispensed specimen into clusters out of the test results run for the respective dispensed specimens, calculating a threshold indicating negative for each of the clusters, sub-dividing each of the clusters into small clusters by the threshold, calculating the ratio of the number of cells in each of the small clusters to the total number of cells, reflecting the central points of the clusters obtained from the result of the predetermined dispensed specimen on the distributions obtained from the test results of the dispensed specimens other than the result of the predetermined dispensed specimen, performing clustering on the distributions depending on the distance from the central points, subdividing each cluster into small clusters by the calculated threshold, calculating the ratio of the number of cells in each of the sub-divided small cluster to the total number of the cells and obtaining the ratios of all the small clusters. It is noted that the predetermined dispensed specimen is desirably a negative specimen.

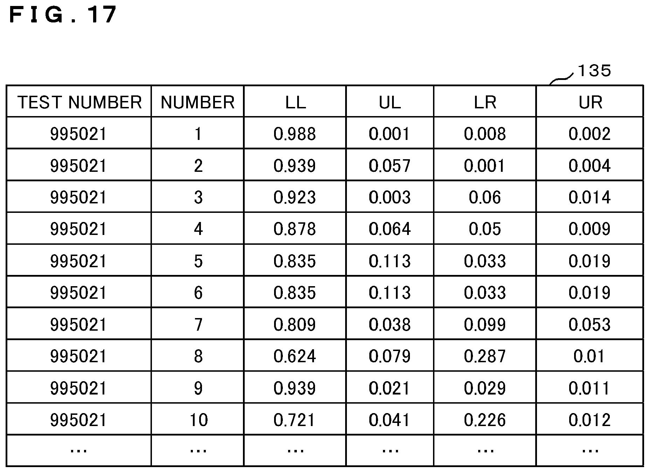

FIG.17 is an explanatory view showing an example of the alternative positive rate DB. The alternative positive rate DB 135 stores an alternative positive rate (APR) calculated from the measurement values. The alternative positive rate DB 135 includes a test number column, a number column, an LL column, a UL column, an LR column and a UR column. The test number column stores a test number. The number column stores a SEQ number. The LL column stores the ratio of the number of cells at the lower left partition. The UL column stores the ratio of the number of cells at the upper left partition. The LR column stores the ratio of the number of cells at the lower right partition. The UR column stores the ratio of the number of cells at the upper right partition.

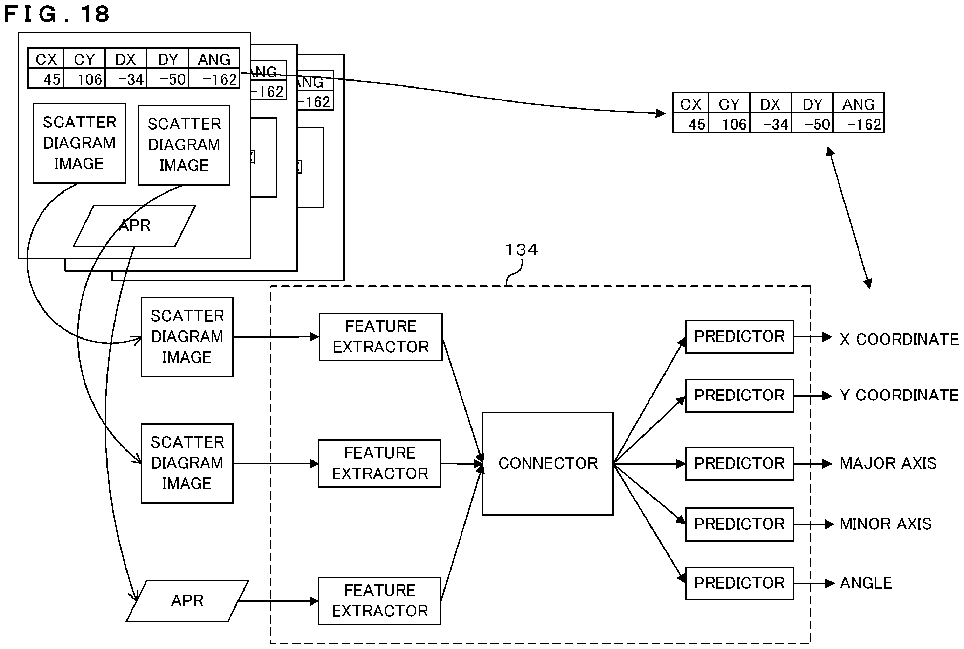

In the present embodiment, the APR evaluated from the measurement values is included as the teaching data for training the regression model 134. FIG.18 is an explanatory view relating to regression model generation processing. FIG. 18 is a modified version of FIG. 6 shown in Embodiment 1. In the present embodiment, three feature extractors are assumed to be used. The two of the feature extractors respectively accept scatter diagram images. The one of the feature extractors accepts APR.

A connector connects feature quantities extracted from the three feature extractors. Predictors predict and output items of the gate information (center x coordinate, center y coordinate, major axis, minor axis and angle of the inclination) based on the connected feature quantities. The processing unit 1 compares the gate information obtained from the predictors with the information labeled on the scatter diagram image as the teaching data, that is, the correct answer values. The processing unit 1 then optimizes parameters used in the arithmetic processing at the feature extractors and the predictors so that the output values from the predictors approximate the correct answer values. The rest of the matters are similar to those of Embodiment 1. It is noted that APR may be input to the connector without going through the feature extractors. Furthermore, sets of values are assigned to the respective nodes included in the output layer, and the nodes may be configured to output probabilities for the sets of values.

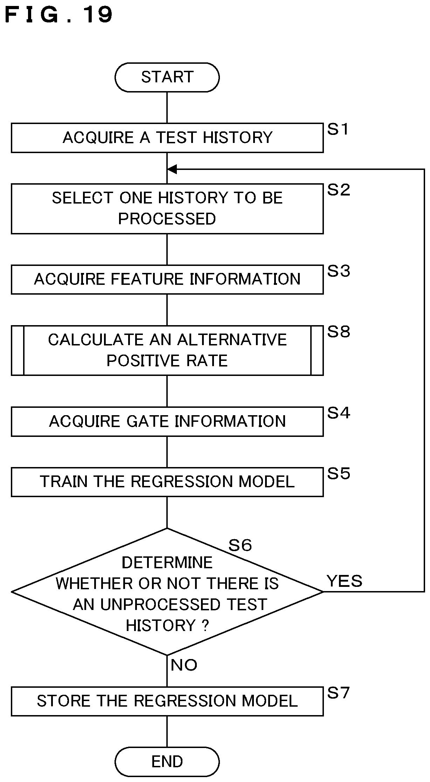

FIG. 19 is a flowchart showing another example of the procedure of the regression model generation processing. The processing similar to that of FIG. 7 is denoted by the same step numbers. The control unit 11 executes step S1 to S3 and then calculates an alternative positive rate (step S8).

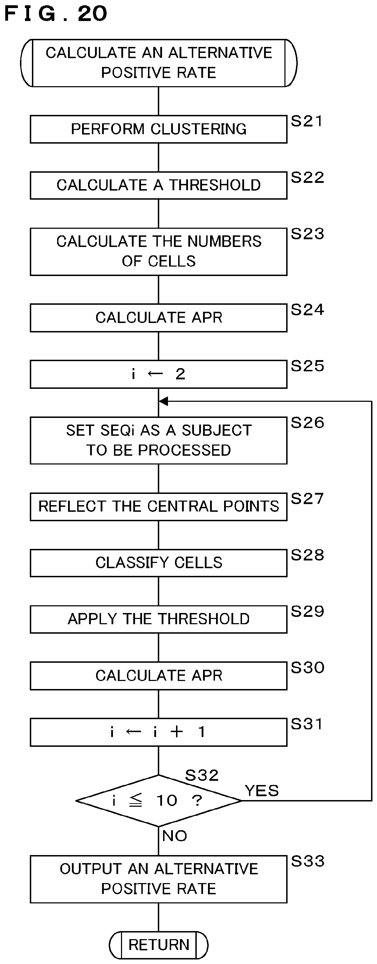

FIG. 20 is a flowchart showing an example of the procedure of alternative positive rate calculation processing. The control unit 11 performs clustering using k-means on the distribution for SEQ 1 with FSC, SSC and FL3 on the axes (step S21). The control unit 11 calculates a threshold indicating negative for each of the populations obtained as a result of the clustering (step S22). The control unit 11 calculates the numbers of cells for respective partitions for each population (step S23). The control unit 11 calculates ratios of the cells for the respective partitions to calculate APR (step S24). The control unit 11 sets 2 to a counter variable i (step S25). The control unit 11 sets SEQi as a subject to be processed (step S26). The control unit 11 reflects the central points of the populations of SEQ 1 on SEQi (step S27). The control unit 11 classifies cells with reference to the central points (step S28). As described above, cells are divided into 10 populations as a result of being classified into groups of cells based on their closest central points. The control unit 11 applies the threshold for SEQ 1 to each of the populations (step S29). The control unit 11 calculates ratios of the cells for respective partitions for each population to calculate APR (step S30). The control unit 11 increases the counter variable i by one (step S31). The control unit 11 determines whether or not the counter variable i is equal to or smaller than 10 (step S32). The control unit 11 returns the processing to step S26 if determining that the counter variable i is equal to or less than 10 (YES at step S32). The control unit 11 outputs an alternative positive rate (step S33) if determining that the counter variable i is not equal to or less than 10 (NO at step S32). The control unit 11 calls and returns the processing.

The processing restarts from step S4 shown in FIG. 19. The control unit 11 trains the learning model 134 at step 5. In the present embodiment as described above, scatter diagram images and APR are employed as an input. A label indicating the correct answer value is gate information. The processing at and after step S6 is similar to that in FIG. 7 and is not repeated here.

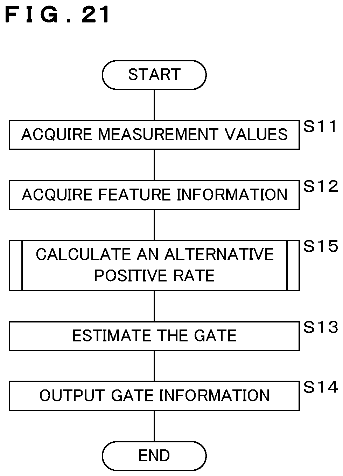

Next, gate setting using the regression model 134 will be described. FIG. 21 is a flowchart showing another example of the procedure of the gate information output processing. The processing similar to that in FIG. 8 is denoted by the same step numbers. The control unit 11 executes step S12 and then calculates an alternative positive rate (step S15). The control unit 11 inputs the scatter diagram images and the alternative positive rate to the regression model 134 to estimate the gate (step S13). The control unit 11 outputs the gate information (step S14) and ends the processing. The work performed by the tester thereafter is similar to that in Embodiment 1 and is thus not repeated here.

In the present embodiment, the alternative positive rate is included as the teaching data for the regression model 134. The alternative positive rate is included when gate information is estimated by the regression model 134 as well. Thus, improvement of the accuracy of the gate information output from the regression model 134 can be expected.

In the present embodiment as well, a variant of Embodiment 1 can be applied. Multiple scatter diagram images and APR are input to the U-NET. The U-NET outputs images each divided into a gate region and a non-gate region, and performs trainings so that the gate region indicated in the output image approaches the correct answer. In the case where the gate region is estimated after training, two scatter diagram images and APR are input to the U-NET. A scatter diagram image on which a gate region is represented can be obtained as an output. The rest of the processing is similar to the above description.

While the description is made taking CD45 gating in an LLA test as an example in the above-described embodiment, a similar procedure is executable even for CD45 gating in a Malignant Lymphoma Analysis (MLA) test. The regression model employed in CD 45 gating in the Malignant Lymphoma Analysis test is provided separately from the regression model 134 for the LLA test and is stored in the auxiliary storage 13. A column indicating the content of the test is added to each of the measurement value DB 131, the feature information DB 132, the gate DB 133 and the alternative positive rate DB 135 so as to make discriminable between LLA data or MLA data. When performing training and prediction of a gate as well, the tester designates the content of the test with the input unit 14.

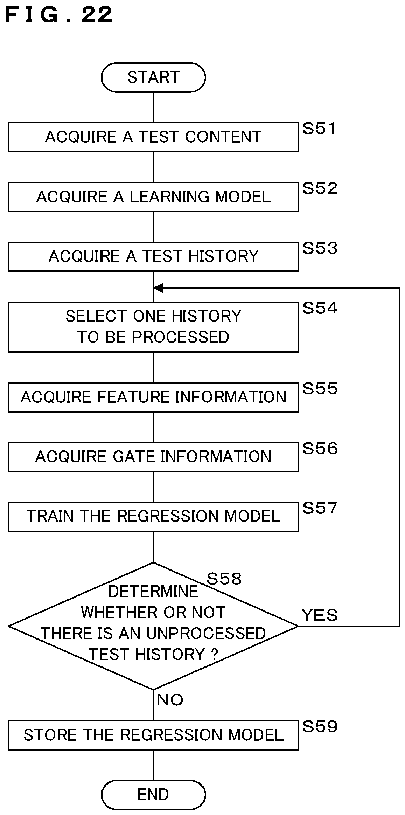

FIG.22 is a flowchart showing another example of the procedure of the regression model generation processing. The control unit 11 acquires a test content (step S51). For example, the test content is LLA, MLA and the like as described above. The control unit 11 acquires a learning model corresponding to the test content (step S52). The learning model is the regression model 134 for LLA, the regression model for MLA, and the like. At and after step S53, the processing is similar to that at and after step S2 in FIG. 7 and is thus not repeated here. It is noted that APR may be added to input data as in Embodiment 2.

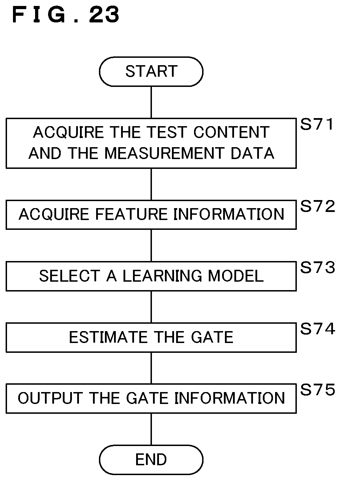

FIG.23 is a flowchart showing another example of the procedure of the gate information output processing. The control unit 11 acquires the test content and the measurement data (step S71). The control unit 11 acquires feature information corresponding to the measurement data (step S72). The control unit 11 selects a learning model corresponding to the test content (step S73). The control unit 11 inputs the feature information to the selected learning model and estimates the gate (step S74). The control unit 11 outputs the gate information (step S75) and ends the processing. In the case of a learning model accepting APR as an input as in Embodiment 2 is employed, APR may be generated from the measurement data and added as input data at step S74.

The technical features (constituent features) in the embodiments can be combined with each other, and the combination can form a new technical feature. It is to be understood that the embodiments disclosed here is illustrative in all respects and not restrictive. The scope of the present invention is defined by the appended claims, and all changes that fall within the meanings and the bounds of the claims, or equivalence of such meanings and bounds are intended to be embraced by the claims.

[Description of Reference Codes]

10     flow cytometer
1      processing unit

| 11 | control unit |
| 12 | main storage |
| 13 | auxiliary storage |
| 131 | measurement value DB |
| 132 | feature information DB |
| 133 | gate DB |
| 134 | regression model |
| 135 | alternative positive rate DB |
| 14 | input unit |
| 15 | display unit |
| 16 | communication unit |
| 17 | reading unit |
| 1P | control program |
| 1a | portable storage medium |
| 1b | semiconductor memory |
| 2 | measurement unit |
| 3 | learning server |

**Claims**

1. A gate region estimation program causing a computer to execute processing of:

   acquiring a group of scatter diagrams including a plurality of scatter diagrams each different in a measurement item that are obtained from measurements by flow cytometry;
   inputting the group of scatter diagrams acquired to a learning model trained based on teaching data including a group of scatter diagrams and a gate region; and
   outputting an estimated gate region obtained from the learning model.

2. The gate region estimation program according to claim 1 further causing a computer to execute processing of outputting a plurality of the estimated gate regions together with a degree of usefulness.

3. The gate region estimation program according to claim 1 or 2, wherein the learning model is obtained by training based on teaching data including the group of scatter diagrams, the gate region and an alternative positive rate, and the program further causes a computer to execute processing of:

   inputting a group of scatter diagrams and an alternative positive rate to the learning model,; and
   obtaining the estimated gate region from the learning model.

4. The gate region estimation program according to any one of claims 1 to 3, wherein the gate region is oval.

5. The gate region estimation program according to any one of claims 1 to 4 further causing a computer to execute processing of:

   acquiring modified region data that is obtained by modifying the estimated gate region; and
   retraining the learning model based on the modified region data acquired.

6. The gate region estimation program according to any one of claims 1 to 5 further causing a computer to execute processing of:

   acquiring a group of scatter diagrams including a plurality of scatter diagrams and a test content; and
   inputting the group of diagrams acquired to the learning model in correspondence with the test content acquired.

7. A gate region estimation device comprising:

   an acquisition unit that acquires a group of scatter diagrams including a plurality of scatter diagrams for different measurement items that are obtained from measurements by flow cytometry;
   an input unit that inputs the group of scatter diagrams acquired to a learning model that is trained based on teaching data including a group of scatter diagrams and a gate region; and
an output unit that outputs an estimated gate region obtained from the learning model.

8. A method of generating a learning model causing a computer to execute processing of:

   acquiring teaching data including a group of scatter diagrams containing a plurality of scatter diagrams for different measurement items that are obtained from measurements by flow cytometry and a gate region corresponding to the group of scatter diagrams in association with each other; and
   generating a learning model that outputs a gate region corresponding to the group of scatter diagrams based on the acquired teaching data in a case where the group of scatter diagrams are input.

9. The method of generating a learning model according to claim 8 causing a computer to execute processing of:

   including an alternative positive rate in the teaching data; and
   training the learning model so that a gate region is output in a case where the group of scatter diagrams and an alternative positive rate are input.

F I G . 1

10

1

PROCESSING UNIT

2

MEASUREMENT UNIT

N

3

# F I G . 2

# F I G . 3

<span style="text-align:right">131</span>

1311

| RECEIPT NUMBER | RECEIPT DATE | TEST NUMBER | TEST DATE | CHART NUMBER | NAME | GENDER | AGE | SPECIMEN TAKING DATE |
|---|---|---|---|---|---|---|---|---|
| 0LLB0002 | 2019/6/26 | 995021 | 2019/6/29 | 12-34-567 | TAROU FC | M | 20 | 2019/6/26 |

1312

| Parameter | 1 | 2 | 3 | 4 | 5 | 6 | 7 | 8 | 9 |
|---|---|---|---|---|---|---|---|---|---|
| Name | FSC-A | SSC-A | FITC-A | PE-A | PerCP-A | PE-Cy7-A | APC-A | APC-Cy-A | Time |
| 1 | … | … | … | … | … | … | … | … | … |
| 2 | … | … | … | … | … | … | … | … | … |
| 3 | … | … | … | … | … | … | … | … | … |
| 4 | … | … | … | … | … | … | … | … | … |
| 5 | … | … | … | … | … | … | … | … | … |
| 6 | … | … | … | … | … | … | … | … | … |
| … | … | … | … | … | … | … | … | … | … |

EP 4 027 131 A1

# F I G . 4

| RECEIPT NUMBER | TEST NUMBER | ORDER | TYPE | HORIZONTAL-AXIS | VERTICAL-AXIS | IMAGE |
|---|---|---|---|---|---|---|
| 0LLB0002 | 995021 | 1 | SCATTER DIAGRAM IMAGE | SSC | CD45 | Binary |
| 0LLB0002 | 995021 | 2 | SCATTER DIAGRAM IMAGE | SSC | FSC | Binary |
| ... | ... | ... | ... | ... | ... | ... |
| ... | ... | ... | HISTOGRAM | FITC | NUMBERS OF CELLS | Binary |

EP 4 027 131 A1

## FIG. 5

| RECEIPT NUMBER | TEST NUMBER | HORIZONTAL-AXIS | VERTICAL-AXIS | GATE NUMBER | CX | CY | DX | DY | ANG |
|---|---|---|---|---|---|---|---|---|---|
| 0LLB0002 | 995021 | SSC | CD45 | 1 | 45 | 106 | −34 | −50 | −162 |
| 0LLB0002 | 995021 | SSC | CD45 | 2 | 64 | 213 | −58 | 66 | 354 |
| ... | ... | ... | ... | ... | ... | ... | ... | ... | ... |

133

FIG.6

# F I G . 7

```
                    ┌─────────────┐
                    │    START    │
                    └──────┬──────┘
                           │
        ┌──────────────────────────────────┐
        │      ACQUIRE A TEST HISTORY       │ S1
        └──────────────────┬───────────────┘
                           │
        ┌──────────────────────────────────┐
        │     SELECT ONE HISTORY TO BE      │ S2
        │            PROCESSED              │
        └──────────────────┬───────────────┘
                           │
        ┌──────────────────────────────────┐
        │    ACQUIRE FEATURE INFORMATION    │ S3
        └──────────────────┬───────────────┘
                           │
        ┌──────────────────────────────────┐
        │     ACQUIRE GATE INFORMATION      │ S4
        └──────────────────┬───────────────┘
                           │
        ┌──────────────────────────────────┐
        │     TRAIN THE REGRESSION MODEL    │ S5
        └──────────────────┬───────────────┘
                           │
                        S6
                    DETERMINE
                 WHETHER OR NOT        YES
              THERE IS AN UNPROCESSED ─────►
                  TEST HISTORY ?
                           │
                          NO
        ┌──────────────────────────────────┐
        │     STORE THE REGRESSION MODEL    │ S7
        └──────────────────┬───────────────┘
                           │
                    ┌─────────────┐
                    │     END     │
                    └─────────────┘
```

# FIG.8

START

ACQUIRE MEASUREMENT VALUES · S11

ACQUIRE FEATURE INFORMATION · S12

ESTIMATE THE GATE · S13

OUTPUT GATE INFORMATION · S14

END

FIG.9

FIG.10

F I G . 11

```
              ┌──────────┐
              │  START   │
              └────┬─────┘
                   │
      ┌────────────┴────────────┐
      │   ACQUIRE UPDATE GATE   │ S41
      │      INFORMATION        │
      └────────────┬────────────┘
                   │◄──────────────────────┐
      ┌────────────┴────────────┐          │
      │   SELECT UPDATE GATE    │ S42      │
      │      INFORMATION        │          │
      └────────────┬────────────┘          │
      ┌────────────┴────────────┐          │
      │ ACQUIRE FEATURE INFORMATION │ S43  │
      └────────────┬────────────┘          │
      ┌────────────┴────────────┐          │
      │ RETRAIN THE REGRESSION MODEL │ S44 │
      └────────────┬────────────┘          │
                   │                       │
              ╱────┴────╲   S45            │
            ╱  DETERMINE  ╲                │
          ╱  WHETHER OR NOT ╲              │
        ╱ THERE IS UNPROCESSED ╲  YES      │
          ╲  UPDATE GATE     ╱─────────────┘
            ╲ INFORMATION ? ╱
              ╲────┬────╱
                   │ NO
      ┌────────────┴────────────┐
      │ UPDATE THE REGRESSION MODEL │ S46
      └────────────┬────────────┘
              ┌────┴─────┐
              │   END    │
              └──────────┘
```

FIG. 12

FL3

SSC

FIG. 13

| 4 | 98 |
|---|---|
| 2244 | 30 |

| 2 | 8 |
|---|---|
| 2740 | 18 |

| 4 | 22 |
|---|---|
| 7156 | 9 |

| 2 | 2 |
|---|---|
| 3735 | 0 |

| 7 | 3 |
|---|---|
| 5061 | 3 |

FL2

| 1 | 2 |
|---|---|
| 5870 | 2 |

| 0 | 0 |
|---|---|
| 4417 | 2 |

| 1 | 7 |
|---|---|
| 7057 | 4 |

| 4 | 27 |
|---|---|
| 4683 | 6 |

| 35 | 195 |
|---|---|
| 1167 | 30 |

FL1

FIG. 14

FIG.15

$$\text{SEQ1}\begin{bmatrix} 0.001 & 0.002 \\ 0.988 & 0.008 \end{bmatrix} \qquad \text{SEQ6}\begin{bmatrix} 0.137 & 0.007 \\ 0.843 & 0.013 \end{bmatrix}$$

$$\text{SEQ2}\begin{bmatrix} 0.057 & 0.004 \\ 0.939 & 0.001 \end{bmatrix} \qquad \text{SEQ7}\begin{bmatrix} 0.038 & 0.053 \\ 0.809 & 0.099 \end{bmatrix}$$

$$\text{SEQ3}\begin{bmatrix} 0.003 & 0.014 \\ 0.923 & 0.060 \end{bmatrix} \qquad \text{SEQ8}\begin{bmatrix} 0.079 & 0.010 \\ 0.624 & 0.287 \end{bmatrix}$$

$$\text{SEQ4}\begin{bmatrix} 0.064 & 0.009 \\ 0.878 & 0.050 \end{bmatrix} \qquad \text{SEQ9}\begin{bmatrix} 0.021 & 0.011 \\ 0.939 & 0.029 \end{bmatrix}$$

$$\text{SEQ5}\begin{bmatrix} 0.113 & 0.019 \\ 0.835 & 0.033 \end{bmatrix} \qquad \text{SEQ10}\begin{bmatrix} 0.041 & 0.012 \\ 0.721 & 0.226 \end{bmatrix}$$

F I G . 16

|  | UL | LL | LR | UR |
|---|---|---|---|---|
| SEQ1 | 0.988 | 0.001 | 0.008 | 0.002 |
| SEQ2 | 0.939 | 0.057 | 0.001 | 0.004 |
|  | 0.923 | 0.003 | 0.060 | 0.014 |
|  | 0.878 | 0.064 | 0.050 | 0.009 |
|  | 0.835 | 0.113 | 0.033 | 0.019 |
|  | 0.843 | 0.137 | 0.013 | 0.007 |
|  | 0.809 | 0.038 | 0.099 | 0.053 |
|  | 0.624 | 0.079 | 0.287 | 0.010 |
| SEQ9 | 0.939 | 0.021 | 0.029 | 0.011 |
| SEQ10 | 0.721 | 0.041 | 0.226 | 0.012 |

F I G . 17

135

| TEST NUMBER | NUMBER | LL | UL | LR | UR |
|---|---|---|---|---|---|
| 995021 | 1 | 0.988 | 0.001 | 0.008 | 0.002 |
| 995021 | 2 | 0.939 | 0.057 | 0.001 | 0.004 |
| 995021 | 3 | 0.923 | 0.003 | 0.06 | 0.014 |
| 995021 | 4 | 0.878 | 0.064 | 0.05 | 0.009 |
| 995021 | 5 | 0.835 | 0.113 | 0.033 | 0.019 |
| 995021 | 6 | 0.835 | 0.113 | 0.033 | 0.019 |
| 995021 | 7 | 0.809 | 0.038 | 0.099 | 0.053 |
| 995021 | 8 | 0.624 | 0.079 | 0.287 | 0.01 |
| 995021 | 9 | 0.939 | 0.021 | 0.029 | 0.011 |
| 995021 | 10 | 0.721 | 0.041 | 0.226 | 0.012 |
| … | … | … | … | … | … |

F I G . 18

| CX | CY | DX | DY | ANG |
|----|-----|-----|-----|------|
| 45 | 106 | −34 | −50 | −162 |

SCATTER DIAGRAM IMAGE

SCATTER DIAGRAM IMAGE

APR

| CX | CY | DX | DY | ANG |
|----|-----|-----|-----|------|
| 45 | 106 | −34 | −50 | −162 |

134

SCATTER DIAGRAM IMAGE → FEATURE EXTRACTOR

SCATTER DIAGRAM IMAGE → FEATURE EXTRACTOR

APR → FEATURE EXTRACTOR

CONNECTOR

PREDICTOR → X COORDINATE

PREDICTOR → Y COORDINATE

PREDICTOR → MAJOR AXIS

PREDICTOR → MINOR AXIS

PREDICTOR → ANGLE

EP 4 027 131 A1

# FIG. 19

```
            ┌─────────────┐
            (    START    )
            └─────────────┘
                   │
    ┌──────────────────────────────┐ S1
    │    ACQUIRE A TEST HISTORY     │
    └──────────────────────────────┘
                   │ ◄──────────────────┐
    ┌──────────────────────────────┐ S2 │
    │   SELECT ONE HISTORY TO BE    │    │
    │          PROCESSED            │    │
    └──────────────────────────────┘    │
                   │                     │
    ┌──────────────────────────────┐ S3 │
    │  ACQUIRE FEATURE INFORMATION  │    │
    └──────────────────────────────┘    │
                   │                     │
    ┌──────────────────────────────┐ S8 │
    │   CALCULATE AN ALTERNATIVE    │    │
    │        POSITIVE RATE          │    │
    └──────────────────────────────┘    │
                   │                     │
    ┌──────────────────────────────┐ S4 │
    │   ACQUIRE GATE INFORMATION    │    │
    └──────────────────────────────┘    │
                   │                     │
    ┌──────────────────────────────┐ S5 │
    │   TRAIN THE REGRESSION MODEL  │    │
    └──────────────────────────────┘    │
                   │          S6         │
                  ╱  DETERMINE  ╲        │
                 ╱ WHETHER OR NOT╲  YES  │
                ╱  THERE IS AN    ╲──────┘
                ╲ UNPROCESSED TEST╱
                 ╲   HISTORY ?   ╱
                  ╲_____╱
                   │ NO
    ┌──────────────────────────────┐ S7
    │   STORE THE REGRESSION MODEL  │
    └──────────────────────────────┘
                   │
            ┌─────────────┐
            (     END     )
            └─────────────┘
```

# F I G . 20

```
┌─────────────────────────┐
│ CALCULATE AN ALTERNATIVE │
│      POSITIVE RATE       │
└─────────────────────────┘
             │
┌─────────────────────────┐ S21
│    PERFORM CLUSTERING    │
└─────────────────────────┘
             │
┌─────────────────────────┐ S22
│   CALCULATE A THRESHOLD  │
└─────────────────────────┘
             │
┌─────────────────────────┐ S23
│   CALCULATE THE NUMBERS  │
│         OF CELLS         │
└─────────────────────────┘
             │
┌─────────────────────────┐ S24
│      CALCULATE APR       │
└─────────────────────────┘
             │
┌─────────────────────────┐ S25
│         i ← 2            │
└─────────────────────────┘
             │
┌─────────────────────────┐ S26
│   SET SEQi AS A SUBJECT  │
│     TO BE PROCESSED      │
└─────────────────────────┘
             │
┌─────────────────────────┐ S27
│ REFLECT THE CENTRAL POINTS│
└─────────────────────────┘
             │
┌─────────────────────────┐ S28
│      CLASSIFY CELLS      │
└─────────────────────────┘
             │
┌─────────────────────────┐ S29
│    APPLY THE THRESHOLD   │
└─────────────────────────┘
             │
┌─────────────────────────┐ S30
│      CALCULATE APR       │
└─────────────────────────┘
             │
┌─────────────────────────┐ S31
│       i ← i + 1          │
└─────────────────────────┘
             │
          S32 ◇  i ≤ 10 ?  ── YES ──┐
             │ NO
┌─────────────────────────┐ S33
│  OUTPUT AN ALTERNATIVE   │
│      POSITIVE RATE       │
└─────────────────────────┘
             │
         ( RETURN )
```

F I G . 21

```
         ┌─────────┐
         │  START  │
         └────┬────┘
              │
   ┌──────────┴──────────────┐
   │ ACQUIRE MEASUREMENT VALUES │ S11
   └──────────┬──────────────┘
              │
   ┌──────────┴──────────────┐
   │ ACQUIRE FEATURE INFORMATION │ S12
   └──────────┬──────────────┘
              │
   ┌──────────┴──────────────┐
   │  CALCULATE AN ALTERNATIVE │ S15
   │     POSITIVE RATE         │
   └──────────┬──────────────┘
              │
   ┌──────────┴──────────────┐
   │     ESTIMATE THE GATE    │ S13
   └──────────┬──────────────┘
              │
   ┌──────────┴──────────────┐
   │  OUTPUT GATE INFORMATION │ S14
   └──────────┬──────────────┘
              │
         ┌────┴────┐
         │   END   │
         └─────────┘
```

# FIG. 22

```
              ( START )
                  │
    ┌─────────────────────────────┐ S51
    │   ACQUIRE A TEST CONTENT     │
    └─────────────────────────────┘
                  │
    ┌─────────────────────────────┐ S52
    │   ACQUIRE A LEARNING MODEL   │
    └─────────────────────────────┘
                  │
    ┌─────────────────────────────┐ S53
    │   ACQUIRE A TEST HISTORY     │
    └─────────────────────────────┘
                  │
                  ▼◄──────────────────────┐
    ┌─────────────────────────────┐ S54    │
    │      SELECT ONE HISTORY      │        │
    │       TO BE PROCESSED        │        │
    └─────────────────────────────┘        │
                  │                        │
    ┌─────────────────────────────┐ S55    │
    │  ACQUIRE FEATURE INFORMATION │        │
    └─────────────────────────────┘        │
                  │                        │
    ┌─────────────────────────────┐ S56    │
    │   ACQUIRE GATE INFORMATION   │        │
    └─────────────────────────────┘        │
                  │                        │
    ┌─────────────────────────────┐ S57    │
    │   TRAIN THE REGRESSION MODEL │        │
    └─────────────────────────────┘        │
                  │           S58          │
                 ╱ DETERMINE ╲             │
                ╱ WHETHER OR NOT ╲  YES     │
               ◄ THERE IS AN UNPROCESSED ───┘
                ╲  TEST HISTORY ? ╱
                 ╲              ╱
                  │ NO
    ┌─────────────────────────────┐ S59
    │  STORE THE REGRESSION MODEL  │
    └─────────────────────────────┘
                  │
              (  END  )
```

# F I G . 23

```
        ┌──────────┐
        │  START   │
        └──────────┘
             │
┌─────────────────────────────┐  S71
│  ACQUIRE THE TEST CONTENT    │
│  AND THE MEASUREMENT DATA    │
└─────────────────────────────┘
             │
┌─────────────────────────────┐  S72
│  ACQUIRE FEATURE INFORMATION │
└─────────────────────────────┘
             │
┌─────────────────────────────┐  S73
│  SELECT A LEARNING MODEL     │
└─────────────────────────────┘
             │
┌─────────────────────────────┐  S74
│  ESTIMATE THE GATE           │
└─────────────────────────────┘
             │
┌─────────────────────────────┐  S75
│  OUTPUT THE GATE INFORMATION │
└─────────────────────────────┘
             │
        ┌──────────┐
        │   END    │
        └──────────┘
```

## INTERNATIONAL SEARCH REPORT

| International application No. |
| --- |
| PCT/JP2020/032979 |

**A. CLASSIFICATION OF SUBJECT MATTER**

G06N 20/00(2019.01)i
FI: G01N15/14 B; G06N20/00 130

According to International Patent Classification (IPC) or to both national classification and IPC

**B. FIELDS SEARCHED**

Minimum documentation searched (classification system followed by classification symbols)
G01N15/14; G06N20/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-515655 A (HEALTH DISCOVERY CORPORATION) 19 May 2011 (2011-05-19) | 1-9 |
| A | JP 2018-505392 A (NEOGENOMICS LABORATORIES, INC.) 22 February 2018 (2018-02-22) | 1-9 |
| A | WO 2018/181458 A1 (THINKCYTE INC.) 04 October 2018 (2018-10-04) | 1-9 |
| A | EP 3054279 A1 (ST. ANNA KINDERKREBSFORDCHUNG E.V.) 10 August 2016 (2016-08-10) | 1-9 |

☐ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 09 November 2020 (09.11.2020) | 17 November 2020 (17.11.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

36

INTERNATIONAL SEARCH REPORT

Information on patent family members

International application No.

PCT/JP2020/032979

| Patent Documents referred in the Report | Publication Date | Patent Family | Publication Date |
|---|---|---|---|
| JP 2011-515655 A | 19 May 2011 | US 2009/0204557 A1<br>WO 2009/100410 A2 | |
| JP 2018-505392 A | 22 Feb. 2018 | US 2016/0169786 A1<br>WO 2016/094720 A1<br>CN 107430587 A | |
| WO 2018/181458 A1 | 04 Oct. 2018 | US 2020/0027020 A1<br>CN 110520876 A | |
| EP 3054279 A1 | 10 Aug. 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6480918 B
- JP 5047803 B